# EUROPEAN PATENT SPECIFICATION

(11) **EP 4 450 569 B1**
(45) Date of publication and mention of the grant of the patent: **18.02.2026**
(21) Application number: 22911319.6
(22) Date of filing: 22.12.2022
(51) Int. Cl.: C09D 5/03, C09D 5/24, C09D 127/12, B32B 15/082, B32B 15/16, C09D 7/61

(54) **POWDER COATING COMPOSITION, COATING, MULTILAYERED COATING, AND COATED ARTICLE**
PULVERBESCHICHTUNGSZUSAMMENSETZUNG, BESCHICHTUNG, MEHRSCHICHTIGE BESCHICHTUNG UND BESCHICHTETER ARTIKEL
COMPOSITION DE REVÊTEMENT EN POUDRE, REVÊTEMENT, REVÊTEMENT MULTICOUCHE ET ARTICLE REVÊTU

(30) Priority: 22.12.2021 JP 2021208589
(43) Date of publication of application: 23.10.2024
(73) Proprietor: DAIKIN INDUSTRIES, LTD., Osaka-shi, Osaka 530-0001 (JP)
(72) Inventor: HONDA, Yukari, Osaka-shi, Osaka 530-0001 (JP); IMADA, Hirotake, Osaka-shi, Osaka 530-0001 (JP); MIYATANI, Toshio, Osaka-shi, Osaka 530-0001 (JP); NAKATANI, Yasukazu, Osaka-shi, Osaka 530-0001 (JP)
(74) Representative: Goddar, Heinz J.
(86) International application number: PCT/JP2022/047264
(87) International publication number: WO 2023/120617

(56) References cited:
- WO-A1-2020/130144
- JP-A- 2020 100 823
- JP-A- 2021 091 773
- JP-A- H10 272 744
- JP-A- S62 227 967
- US-A1- 2015 194 240

## Description

### Technical Field

The present disclosure relates to a powder coating material composition, a coating film, a multilayer coating film, and a coated article.

### Background Art

In the coating material field, for purposes of antistaticity and the like, electroconductive coating materials are generally used. The electroconductive coating materials are coating films imparted with electroconductivity by blending electroconductive materials.

Also in powder coating material compositions using fluororesins, for various purposes, it is carried out making electroconductive coating materials by blending electroconductive materials. For example, in Patent Literatures 1 to 3, there are disclosed powder coating material compositions in which various types of electroconductive material are blended in fluororesins.

Further, in Patent Literatures 3 to 6, fluororesin compositions containing carbon nanotubes are disclosed. Patent Literature 7 discloses coatings that comprise a fluoropolymer and carbon nanotubes.

### Citation List

### Patent Literature

Patent Literature 1: Japanese Patent Laid-Open No. 58-25368
Patent Literature 2: Japanese Patent Laid-Open No. 11-71521
Patent Literature 3: Japanese Patent Laid-Open No. 2014-151535
Patent Literature 4: Japanese Patent Laid-Open No. 2004-124086
Patent Literature 5: International Publication No. WO2004/039883
Patent Literature 6: Japanese Patent Laid-Open No. 2020-100823
Patent Literature 7: US 2015194240 A1

### Summary of Invention

### Technical Problem

The present disclosure has an object to provide a powder coating material composition which can simultaneously satisfy both of excellent electroconductive performance and surface smoothness.

### Solution to Problem

The present disclosure is:
a powder coating material composition comprising a fluorine-containing ethylenic polymer and an electroconductive material,
wherein the electroconductive material is at least partially a carbon nanotube; and
the carbon nanotube is contained in a proportion of 0.01 to 0.35% by mass to a total amount of the fluorine-containing ethylenic polymer and the electroconductive material.

The average particle size of the fluorine-containing ethylenic copolymer can be made to be smaller than 100 µm.

The average particle size of the fluorine-containing ethylenic copolymer can be made to be 100 µm to 1,000 µm.

A coating film of 80 µm in thickness, obtained by electrostatically coating the powder coating material composition on a metal plate, and subsequently forming a film at a temperature higher by 80°C than the melting point of the fluorine-containing ethylenic polymer, preferably has a surface roughness Ra of 3.0 µm or lower and a volume resistivity of 1 × 10¹⁴ Q.cm or lower.

A coating film of 1,000 µm in thickness, obtained by laying the powder coating material composition on a metal plate, and subsequently forming a film at a temperature higher by 80°C than the melting point of the fluorine-containing ethylenic polymer, preferably has a surface roughness Ra of 3.0 µm or lower and a volume resistivity of 1 × 10¹⁴ Ω·cm or lower.

The fluorine-containing ethylenic polymer is preferably a copolymer essentially containing a tetrafluoroethylene unit, and containing at least one selected from the group consisting of a perfluoroalkyl vinyl ether unit, a hexafluoropropylene unit and an ethylene unit.

The carbon nanotube preferably has a G/D ratio of 2.0 or higher. The carbon nanotube is preferably a single-walled carbon nanotube.

The present disclosure is also a coating film formed from the above-mentioned powder coating material composition.

The present disclosure is also a laminate comprising the coating film.

The present disclosure is also a laminate comprising the coating film as a front side layer of the laminate.

The present disclosure is also a coated article comprising a metal substrate having the coating film or the laminate of claim 6 provided on the metal substrate.

### Advantageous Effects of Invention

A powder coating material composition of the present disclosure simultaneously satisfies both of excellent electroconductive performance and surface smoothness.

### Description of Embodiments

Hereinafter, the present disclosure will be described in detail.

Due to that conventional electroconductive powder coating material compositions are ones in which an electroconductive filler is blended in a large amount, ruggedness originated from the filler ends in being caused. Hence, it is difficult to provide a powder coating material composition capable of forming a coating film having excellent performance in both performance characteristics of the electroconductivity and the smoothness.

Fluororesins are a resin material used in the very many fields due to their physical and chemical performance. Also in coating materials using such fluororesins, the electroconductivity is sometimes demanded. Also in the coating materials with the fluororesins, however, there is a problem of the above-mentioned simultaneous satisfaction of both the electroconductivity and the smoothness. This is one problem not conventionally having been solved.

As a result of studies based on the above, it has been found that in the case where among various types of electroconductive material, a carbon nanotube is blended in a powder coating material composition, a high electroconductivity can be attained even in a small amount of the carbon nanotube blended, and it has been found that this leads to simultaneous satisfaction of both of the electroconductivity and the smoothness.

The powder coating material composition in the present disclosure preferably contains a fluorine-containing ethylenic polymer having an average particle size of 1,000 µm or smaller and an electroconductive material. The average particle size is a value measured by a laser diffraction·scattering method. The average particle size is more preferably smaller than 800 µm and most preferably smaller than 500 µm. The lower limit of the average particle size is not limited, but is preferably 10 µm or larger.

A coating film, obtained by forming the powder coating material composition of the present disclosure into the coating film at a temperature higher by 80°C than the melting point of the fluorine-containing ethylenic polymer, preferably has a surface roughness Ra of 3.0 µm or lower and a volume resistivity of 1 × 10¹⁴ Ω·cm or lower. That is, the powder coating material composition of the present disclosure is preferably one capable of forming a coating film having both of such smoothness and electroconductivity from the powder coating material composition.

Such suitable surface roughness and volume resistivity are values measured for coating films formed from the powder coating material composition of the present disclosure. Methods of forming the coating films for measuring such parameters are, in the present disclosure, different between in the case where the average particle size is smaller than 100 µm and in the case where that is 100 µm or larger.

Methods of forming coating films from powder coating material compositions are generally often different between in the case where the average particle size is small and in the case where that is large. That is, in the case where the average particle size is smaller than 100 µm, electrostatic coating or the like is often carried out; and in the case where that is larger than 100 µm, a rotolining process or the like is often carried out.

Hence, methods of forming coating films for the parameter measurement will be described as separate methods with the average particle size of 100 µm as the boundary. Hereinafter, this measuring method will be described in detail. Then, the average particle size herein is also a value measured by the above-mentioned method.

### (Method for forming a coating film for parameter measurement in the case where the average particle size is smaller than 100 µm)

In the case where the fluorine-containing ethylenic polymer contained in the powder coating material composition of the present disclosure has an average particle size of smaller than 100 µm, in a coating film of 80 µm in thickness, obtained by electrostatically coating the powder coating material composition on a metal plate, and subsequently forming a film at a temperature higher by 80°C than the melting point of the fluorine-containing ethylenic polymer, the surface roughness and the volume resistivity are measured.

This is a measuring method on the supposition of the case where a coating film is formed by electrostatic coating, which is a usual coating method for powder coating material compositions containing a fluorine-containing ethylenic polymer of smaller than 100 µm in average particle size. That is, there is made a coating film in the case where coating is carried out under the usual condition for such average particle size. In the case where a coating film is formed by electrostatic coating using the powder coating material composition of the present disclosure, a high coating property can be attained. Hence, the number of coating/sintering cycles for obtaining a predetermined film thickness can be reduced.

SUS304 is used as a substrate in such measurement, and the electrostatic coating is carried out by using an electrostatic powder coating machine, manufactured by Anest Iwata Corp. Then, it is more preferable that primer coating is carried out on a substrate and subsequently, a coating film of the powder coating material composition of the present disclosure is formed. In this case, the primer coating material is not limited as long as being capable of securing adhesion, but use of each of primer coating materials used in Examples is especially preferable.

Here, the melting point of the resin is a temperature corresponding to the maximum value in a heat-of -fusion curve when the resin is heated at a rate of 10°C/min by using a differential scanning calorimeter [DSC]. A coating film is formed by sintering the resin at a temperature higher by 80°C than the melting point. The sintering time is not limited, and it suffices if a coating film is sufficiently fluidized to make a uniform coating film, but 30 min is especially preferable.

Such a coating film is made to be 80 µm in thickness. The coating film thickness can be regulated by a usual method. The thickness is measured by using an eddy-current type film thickness meter, manufactured by Sanko Electronic Laboratory Co. Ltd.

### (Method for forming a coating film for parameter measurement in the case where the average particle size is 100 µm or larger)

It is difficult for the powder coating material composition containing the fluorine-containing ethylenic polymer of 100 µm or larger in average particle size to be coated by electrostatic coating as described above, and a coating film is formed by a rotolining process or the like. Accordingly, a coating film is formed by a method after these coating methods and the surface roughness and the volume resistivity are then measured.

Specifically, these measurements are carried out for a coating film of 1,000 µm in thickness, obtained by laying the powder coating material composition on a metal plate and subsequently forming a film at a temperature higher by 80°C than the melting point of the fluorine-containing ethylenic polymer. The melting point, the film thickness and the like of the fluorine-containing ethylenic polymer herein are measured by the same methods as the above-mentioned methods. Then, a substrate to be used for forming a film is a SUS304 plate. Then, it is more preferable that primer coating is carried out on the substrate and subsequently, a coating film of the powder coating material composition of the present disclosure is formed. In this case, the primer coating material is not limited as long as being capable of securing sufficient adhesion, but use of each of primer coating materials used in Examples is especially preferable.

Although such a coating film is 1,000 µm in thickness, the thickness can be regulated by a usual method. The coating film thickness herein is also a value measured by the above-mentioned method.

### (Surface roughness)

In the case where a coating film is fabricated from the powder coating material composition of the present disclosure by the above-mentioned methods, the surface roughness Ra thereof is 3.0 µm or lower. That is, the powder coating material composition has a feature in that such a smooth coating film can be formed. High smoothness is preferable in that advantageous effects can be attained on releasability and lubricity.

The surface roughness Ra refers to an arithmetic average roughness, and is measured by using a miniature surface roughness tester. The surface roughness is more preferably 2.0 or lower and still more preferably 1.0 or lower. Making the surface roughness to be in such a range is preferable in that a sufficient smoothness can be attained.

### (Volume resistivity)

In the case where a coating film is fabricated from the powder coating material composition of the present disclosure by the above-mentioned methods, the volume resistivity thereof is 1 × 10¹⁴ Ω·cm or lower. Having such a low volume resistivity is preferable in that an antistatic function is attained. The volume resistivity herein is measured by using a resistivity meter, manufactured by Mitsubishi Chemical Corp.

The volume resistivity is more preferably 1 × 10¹⁰ Ω·cm or lower and still more preferably 1 × 10⁸ Ω·cm or lower. Making the volume resistivity to be in such a range is preferable in that a sufficient electroconductivity can be attained.

The lower limit of the volume resistivity is not limited, but is preferably 1 × 10³ Ω·cm or higher and more preferably 1 × 10⁵ Ω·cm or higher. In the case where the volume resistivity is too low, particularly in the case where electrostatic coating is carried out, there arises a risk of lowering the coating efficiency.

### (Carbon nanotube)

In the powder coating material composition of the present disclosure, it is necessary that part of or the whole of electroconductive materials is a carbon nanotube. That is, the carbon nanotube can attain excellent electroconductive performance in a small amount thereof. Hence, even by making the amount of the carbon nanotube added in the coating material to be very small, good electroconductive performance can be attained. Then, reducing the amount to be added enables making the coating material capable of forming a coating film excellent in the surface smoothness.

The carbon nanotube may be a multi-walled one or may be a single-walled one, but a single-walled carbon nanotube is especially preferable. The single-walled carbon nanotube is preferable particularly in that it is excellent in the electroconductive performance.

The single-walled carbon nanotube is a carbon material of a special kind known as a one-dimensional material. The single-walled carbon nanotube is a tube in which a wall composed of a sheet of graphene and having a one-atom's thickness is wound so as to form a hollow tube. Due to having such a chemical structure and size, the single-walled carbon nanotube exhibits excellent mechanical, electric, thermal and optical characteristics.

The average outer diameter of the single-walled carbon nanotube is preferably 2.5 nm or smaller. The outer diameter is more preferably 1.0 to 2.5 nm, still more preferably 1.1 to 2.0 nm and especially preferably 1.2 to 1.8 nm. The average outer diameter of the single-walled carbon nanotube can be determined from a photoabsorption spectrum and a Raman spectrum of the single-walled carbon nanotube, obtained by ultraviolet-visible-near infrared spectroscopy (UV-Vis-NIR), or a transmission electron microscope (TEM) image thereof.

The average tube length of the single-walled carbon nanotube is preferably shorter than 100 µm. The average tube length is more preferably 0.1 to 50 µm, still more preferably 0.5 to 20 µm and especially preferably 1 to 10 µm. The average tube length of the single-walled carbon nanotube can be determined by obtaining an AFM image of single-walled carbon nanotubes by using an atomic force microscope (AFM), or obtaining a TEM image of single-walled carbon nanotubes by using a transmission electron microscope (TEM), measuring the length of each single-walled carbon nanotube and dividing the total value of the lengths by the number of the single-walled carbon nanotubes measured.

The G/D ratio measured by the Raman spectroscopy (wavelength: 532 nm) of the single-walled carbon nanotube is preferably 2.0 or higher, and more preferably 3.0 or higher.

The range of the G/D ratio including the upper limit is preferably 2 to 250, more preferably 5 to 250, especially preferably 10 to 220 and most preferably 40 to 180. The G/D ratio is an intensity ratio (G/D) between the G band and the D band of a Raman spectrum of the single-walled carbon nanotube. A higher G/D ratio of the single-walled carbon nanotube means higher crystallinity of the single-walled carbon nanotube and fewer carbon nanotubes having impurity carbon and defects.

Then, single-walled carbon nanotubes having a G/D of as very high as 90 or higher are well known, and these carbon nanotubes can also be used suitably. A carbon nanotube thus having a high G/D ratio is especially preferable in that the carbon nanotube can impart electroconductivity in a low content thereof and can develop good surface roughness and stress cracking resistance of a coating film.

As the carbon nanotube, commercially available ones can suitably be used. The commercially available products include, as single-walled carbon nanotubes, TUBALL, manufactured by OCSiAl LLC and ZEONANO, manufactured by Zeon Corp., and as multi-walled carbon nanotubes, NC7000, manufactured by Nanocyl S.A. and CNTM15, manufactured by Nanocs Inc.

The carbon nano tube is contained in a proportion of 0.01 to 0.35% by mass with respect to the total amount of the fluorine-containing ethylenic polymer and the carbon nanotube. The case where the carbon nanotube is added in a larger amount than the above amount to be blended is not preferable in that the surface smoothness is likely to decrease. The case of a smaller amount than the above amount to be blended is not preferable in that sufficient electroconductive performance cannot be attained.

The above amount to be blended is more preferably 0.30% by mass or smaller, still more preferably 0.28% by mass or smaller and most preferably 0.25% by mass or smaller. The above amount to be blended is more preferably 0.02% by mass or larger.

In the case where the powder coating material of the present disclosure is used as one for electrostatic coating, it is especially preferable that the amount of the carbon nanotube to be blended is 0.07% by mass or larger, in that the powder coating material becomes one good in the coating efficiency.

The electroconductive material to be used in the present disclosure may be composed only of the carbon nanotube, or as required, may be one blended with other electroconductive materials. In the case where the other electroconductive materials are used, however, since use in an excessive amount causes a decrease in the surface smoothness, even in the case of use thereof, it is preferable that the amount to be used is 5% by mass or smaller with respect to the total amount of the powder coating material composition.

The other electroconductive materials are not limited, and include electroconductive carbon compounds such as electroconductive carbon black, graphite, carbon fibers, expanded graphite, graphene and carbon nanohorns, metal oxides such as ZnO, TiO, TiO₂, SnO₂, Al₂O₃, In₂O₃, SiO, SiO₂, MgO, BaO and MoO₃, and metal powders such as zinc powder, nickel powder, silver powder, copper powder and aluminum powder.

### (Fluorine-containing ethylenic polymer)

The fluorine-containing ethylenic polymer is not limited, and a well-known any one can be used. Examples of the fluorine-containing ethylenic polymer include ones obtained by polymerization using one or two or more of monomer components, for example, chlorofluorovinyl monomers such as chlorotrifluoroethylene; fluorovinyl monomers such as trifluoroethylene; and perfluoromonomers such as tetrafluoroethylene, hexafluoropropylene and perfluoro(alkyl vinyl ether). The monomer component may further contain one or two or more of vinyl monomers such as ethylene and propylene.

The fluorine-containing ethylenic polymer is preferably a copolymer containing, among these, essentially a tetrafluoroethylene unit, and containing at least one selected from the group consisting of a perfluoroalkyl vinyl ether unit, a hexafluoropropylene unit and an ethylene unit. Then, the fluorine-containing ethylenic polymer may be one concurrently using two or more kinds of these copolymers.

The fluorine-containing ethylenic polymer may contain, as comonomers in small amounts to be copolymerized together with the above monomer components, monomers having a functional group such as a hydroxyl group or a carbonyl group, or monomers having a cyclic structure. Examples of the cyclic structure include cyclic ether structures such as a cyclic acetal structure, and the cyclic structure is preferably one in which at least two carbon atoms constituting the cyclic ether structure constitute a part of the main chain of the fluorine-containing ethylenic polymer.

Examples of the fluorine-containing ethylenic polymer include alkylene/fluoroalkylene copolymers such as ethylene/tetrafluoroethylene copolymers [ETFE], ethylene/chlorotrifluoroethylene copolymers and propylene/tetrafluoroethylene copolymers; and perfluoropolymers such as tetrafluoroethylene/hexafluoropropylene copolymers [FEP] and tetrafluoroethylene/perfluoro (alkyl vinyl ether) copolymers [PFA].

It is preferable that the fluorine-containing ethylenic polymer is meltable. When the fluorine-containing ethylenic polymer is meltable, it can be melted and formed into a coating film by sintering.

The meltability of the fluorine-containing ethylenic polymer is usually represented by an MFR as an index of flowability. The MFR is indicated as a mass extruded from a nozzle of 2 mm in diameter at a load of 5 kg for 10 min according to ASTM D3159. The MFR is measured at 372°C in the case where the fluorine-containing ethylenic polymer is a perfluoropolymer such as PFA or FEP, and at 297°C in the case where the fluorine-containing ethylenic polymer is ETFE.

The MFR of the fluorine-containing ethylenic polymer is preferably 0.1 to 50 g/10 min and more preferably 1 to 30 g/10 min. When the MFR is in the above range, the adhesion between an obtained primer coating film and a meltable perfluoropolymer coating film is more improved due to the flowing property of the fluorine-containing ethylenic polymer.

The fluorine-containing ethylenic polymer, by regulating the above-mentioned molecular weight, can be made to be one having a melt flow rate in the above-mentioned range.

A method for producing the fluorine-containing ethylenic polymer is not limited, and the fluorine-containing ethylenic polymer can be obtained, for example, by copolymerization using a conventionally well-known polymerization method such as emulsion polymerization. The fluorine-containing ethylenic polymer, as required, is crushed so as to become a fluorine-containing ethylenic polymer powder having an average particle size in the above range. A crushing method is not limited, and for example, a conventionally well-known method can be used. The method includes, for example, a method in which the above fluorine-containing ethylenic dried polymer powder obtained by emulsion polymerization is compressed into a sheet by a roll and crushed by a crushing machine and classified.

The powder coating material composition of the present disclosure may be one in which the electroconductive material is mixed in a resin powder composed of the fluorine-containing ethylenic polymer, or may be a mixture of powders.

As a method of mixing powders, a conventionally well-known method can be used. The powders can be mixed by a mixing machine such as a Henschel mixer, a V-type mixer, a rocking mixer or a double cone mixer.

### (Coating method)

The powder coating material composition of the present disclosure can be formed into a coating film by a well-known coating method.

The powder coating material composition of the present disclosure can be formed into a suitable coating film in electrostatic coating or rotolining. Generally, in the case where the average particle size is smaller than 100 µm, a method of forming the coating film by electrostatic coating is preferable; and in the case where the average particle size is larger than 100 µm, a method of forming the coating film by rotolining is preferable.

### (Coating film)

The present disclosure is also the coating film formed from the above-mentioned powder coating material composition. Such a coating film is preferable in that the coating film is especially excellent in performance characteristics such as chemical resistance, electroconductivity, smoothness, non-tackiness, heat resistance, lubricity and abrasion resistance.

The coating film of the present disclosure may be one formed by either process of electrostatic coating and rotolining, that are general coating methods of the powder coating material composition.

In the case where the coating film is formed by electrostatic coating, it is preferable that the coating film of 30 to 1,000 µm in thickness is formed by using the powder coating material composition containing the fluorine-containing ethylenic polymer of 10 to smaller than 100 µm in average particle size.

In the case where the coating film is formed by rotolining, it is preferable that the coating film of 1,000 to 5,000 µm in thickness is formed by using the powder coating material composition containing the fluorine-containing ethylenic polymer of 100 to 500 µm in average particle size.

### (Multilayer coating film)

The coating film of the present disclosure may be a single-layer coating film composed of the above-mentioned powder coating material composition, or may be a multilayer coating film further having other layers.

The multilayer coating film more specifically includes constitutions including a multilayer coating film composed of two layers formed by forming a primer coating film and subsequently forming a coating film from the above-mentioned powder coating material composition, a multilayer coating film composed of two layers formed by forming a coating film from the above-mentioned powder coating material composition and forming a top coat film from another coating material composition on the coating film, and a multilayer coating film composed of three layers of a primer, an electroconductive coating film according to the present disclosure, and a top coat film. It is especially preferable that a coating film formed from the powder coating material composition of the present disclosure is formed as a front side layer.

In the case where a multilayer coating film having such a layer constitution is formed, coating material compositions for forming a primer coating film layer and a top coat film layer are not limited, and usual ones can be used.

### (Primer coating material composition)

A primer coating material composition for forming the primer coating film layer include, for example, a primer containing a fluorine-containing ethylenic polymer and a heat-resistant resin, wherein the heat-resistant resin is at least one selected from the group consisting of amido group-containable polymeric compounds and polyether sulfone resins.

In the primer coating material composition, the fluorine-containing ethylenic polymer is preferably at least one selected from the group consisting of copolymers containing essentially a tetrafluoroethylene unit, and containing at least one selected from the group consisting of a perfluoroalkyl vinyl ether unit, a hexafluoropropylene unit and an ethylene unit.

The fluorine-containing ethylenic polymer to be contained in the primer coating material composition may be identical with or different from the fluorine-containing ethylenic polymer used in the powder coating material composition of the present disclosure, but is preferably identical therewith. That is, in the case where ETFE is used in the powder coating material composition, it is preferable that as the fluorine-containing ethylenic polymer to be contained in the primer coating material composition, ETFE is used. Also in the cases of FEP and PFA, the same applies.

The amido group-containable polymeric compound is an amido group-containing polymer (a1) having amido groups and aromatic rings, and/or an amido group-containing polymer precursor (a2) which is to be converted to the amido group-containing polymer (a1) by firing when the primer coating material composition is coated.

The amido group-containing polymer (a1) is usually a polymer having amido groups (-NH-C(=O)-) in the main chain or side chains and aromatic rings in the main chain.

The amido group-containing polymer (a1) is preferably a polyamideimide (PAI),a polyamide and/or a polyamide acid(a polyamic acid).

The PAI is a polycondensate having amido groups, aromatic rings and imido groups. The PAI is not limited, and for example, in addition to conventionally well-known PAIs, there can be used PAIs having amido groups introduced by oxidation of polyimides (PI), and the like.

The polyamide is a polycondensate having amido bonds (-NH-C(=O)-) in the main chain. The polyamide is not limited, and includes, for example, aliphatic polyamides such as nylon 6, nylon 66, nylon 11 and nylon 12; and aromatic polyamides such as polyparaphenylene terephthalamide and polymetaphenylene isophthalamide.

The polyamide acid is a polycondensate having amido groups, and carboxyl groups or derivatives of carboxyl groups. The polyamide acid is not limited, and includes polyamide acids having a molecular weight of several thousands to several tens of thousands.

The amido group-containing polymer precursor (a2) is to be converted to the amido group-containing polymer (a1) by firing when the primer coating material composition is coated.

The "firing when the primer coating material composition is coated" corresponds to:
(1) "firing" usually carried out after the primer composition is applied and before the powder coating material composition of the present disclosure is coated;
(2) "sintering" when the powder coating material composition is coated after the firing of the above (1); or
(3) "sintering" when the above finish coat is coated without carrying out the firing of the above (1), and
is a concept which may include any firing/sintering of the above (1) to (3).

The amido group-containing polymer precursor (a2), as described above, is converted to the amido group-containing polymer (a1) by firing when the primer coating material composition is coated, and, since the aromatic rings of the amido group-containing polymer (a1) usually makes no change in the firing, has the aromatic rings, but has no amido groups before the primer coating material composition of the present disclosure is coated and firing thereof is started.

In the present description, the polymeric compound having amido groups and further aromatic rings as well before the primer coating material composition is coated and firing thereof is started corresponds to the above-mentioned amido group-containing polymer (a1).

The amido group-containing polymer precursor (a2) is not limited as long as being one which is converted to the amido group-containing polymer (a1) by coating and firing the primer coating material composition of the present disclosure, and may be, for example, PI or the like. The PI can introduce amido groups to the main chain by coating the primer coating material composition of the present disclosure and firing the composition at a high temperature for a long time to cause the composition to be oxidized. The amido group-containing polymer (a1) obtained by introducing amido groups to the PI is PAI or a polyamide acid; for being PAI, it suffices if not all imido groups in the main chain of PI are converted to amido groups, and for being a polyamide acid, all imido groups in the main chain of PI are converted to amido groups and carboxyl groups.

A method of introducing amido groups to the PI is not limited, and includes, for example, a method in which imido groups (imido rings) of PI are opened by oxidation and a method in which an alkali is made to act on imido groups (imido rings) of PI, which are then hydrolyzed. In the present description, sites on the molecular structure to which amido groups are to be introduced, for example, imido groups which ends in being converted to amido groups by the above-mentioned oxidation, are sometimes referred to as amido group-introducing sites.

The amido group-containable polymeric compound (A) has amido groups, or is one ending in having amido groups.

The above "ending in having amido groups" means that although at the time point when the amido group-containable polymeric compound (A) is blended in order to prepare the primer coating material composition of the present disclosure, the amido group-containable polymeric compound (A) is allowed necessarily not to have amido groups, a chemical change is caused by firing when the primer coating material composition is coated, and amido groups are introduced before the firing is finished.

In the present description, the above "having amido groups or ending in having amido groups" is a concept which may include, at the time point when the amido group-containable polymeric compound (A) is blended in order to prepare the primer coating material composition of the present disclosure, any of the amido group-containable polymeric compound having amido groups and having no amido group-introducing sites, the amido group-containable polymeric compound having no amido groups and having amido group-introducing sites, and the amido group-containable polymeric compound having amido groups and having amido group-introducing sites. That is, the primer coating material composition of the present disclosure may contain both of the amido group-containing polymer (a1) and the amido group-containing polymer precursor (a2), or may contain only one thereof.

The polyphenylene sulfide can suppress oxidation of the amido groups.

The polyphenylene sulfide conceivably can retard oxidation of the amido groups by autoxidation in preference to oxidation of the amido groups.

The content of the polyphenylene sulfide is 1 to 50% by mass of the total of the amido group-containable polymeric compound and the polyphenylene sulfide. When the content exceeds 50% by mass, the adhesive force after a hot water treatment is liable to decrease; and when lower than 1% by mass, the adhesive force after a heat treatment is liable to decrease.

In the primer coating material composition, the blend proportion of the fluorine-containing ethylenic polymer and the heat-resistant resin is preferably the fluorine-containing ethylenic polymer : the heat-resistant resin = 50 : 50 to 90 : 10 (in mass ratio).

The primer coating material composition may be a liquid coating material composition or a powder coating material composition. In the case of the liquid coating material composition, the liquid medium is not limited, but examples thereof include liquid media containing at least one dispersion medium selected from the group consisting of N-methyl-2-pyrrolidone, N-ethyl-2-pyrrolidone, N-butyl-2-pyrrolidone, 3-alkoxy-N,N-dimethylpropanamide, dimethyl sulfoxide, 1,3- dimethyl-2-imidazolidinone, 3-methyl-2-oxazolidinone, N-formylmorpholine, N-acetylmorpholine, dimethylpropylene urea, anisole, diethyl ether, ethylene glycol, acetophenone, methyl ethyl ketone, methyl isobutyl ketone, cyclohexanone, cyclopentanone, xylene, toluene, ethanol, 2-propanol and water. The liquid medium may be a mixed solvent of two or more solvents selected from these.

The primer coating material composition, in the case of being the liquid coating material composition, may further contain a nonionic surfactant. The nonionic surfactant is not limited, but a polyoxyethylene alkyl ether-based surfactant is more preferable.

The film thickness of a primer coating film to be formed from the primer coating material composition is not limited, but is, for example, preferably 10 to 100 µm. Making the film thickness to be such a thickness is preferable in that a coating film to be formed from the powder coating material composition of the present disclosure exhibits good adhesion.

### (Laminate)

The present disclosure is also a laminate having the above-mentioned coating film. Such a laminate may be, for example, a laminate in which the coating film of the present disclosure is formed as a single layer on a substrate, or a laminate in which a multilayer coating film containing the coating film of the present disclosure is formed thereon. It is preferable that the coating film of the present disclosure is formed as a front-side layer.

### (Coated article)

The present disclosure is also a coated article in which the above-mentioned coating film or laminate is provided on a metal substrate. That is, it is preferable that the coating film or laminate of the present disclosure is provided on a metal substrate. The metal substrate is not limited, and includes iron and stainless steel.

### (Applications)

Applications of the powder coating material composition of the present disclosure are not limited, but the powder coating material composition can be used especially suitably, for example, in linings and the like in various types of plants and manufacturing apparatuses of chemical factories, iron-manufacturing factories, pharmaceutical factories, semiconductor factories and the like. In these applications, the static electricity generated on lining surfaces can be reduced and the performance as linings can be improved.

### Examples

Hereinafter, the present disclosure will be described specifically based on Examples.

In the following Examples, unless otherwise specified, "parts" and "%" represent "parts by mass" and "% by mass", respectively.
Surface roughness: the surface roughness of coating films was evaluated by using a surface roughness tester (SJ-210, manufactured by Mitutoyo Corp.).
Electroconductivity: the volume resistance of coating films was evaluated by using a resistivity meter (MCP-HT-450, manufactured by Mitsubishi Chemical Corp.).
Stress cracking resistance: by using an MIT-type folding endurance tester (No. 307, manufactured by Yasuda Seiki Seisakusho, Ltd.), a load of 12.25 N was applied on a coating film, and folding was repeated at a folding rate of 175 times/min and a folding angle of 135°; and the number of times of the folding until the coating film was broken was measured. By averaging measurement values of five specimens, the stress cracking resistance was evaluated.

Raw materials used in Examples were as follows.
FEP powder A
   MFR: 15 (g/10 min), melting point: 259°C, average particle
   size: 40 µm
ETFE powder A
   MFR: 14 (g/10 min), melting point: 220°C, average particle
   size: 40 µm
PFA powder A
   MFR: 28 (g/10 min), melting point: 301°C, average particle
   size: 24 µm
ETFE powder B
   MFR: 29 (g/10 min), melting point: 221°C, average particle
   size: 199 µm
PFA powder B
   MFR: 14 (g/10 min), melting point: 303°C, average particle
   size: 224 µm

### Comparative Example 1

TC-11000 (manufactured by Daikin Industries, Ltd.) as a primer was applied on a SUS304 plate, and dried at 100°C for 30 min to thereby obtain a coating film of 30 µm in thickness; subsequently, the FEP powder A as a fluorine-containing ethylenic polymer was electrostatically coated, and sintered at a temperature higher by 80°C than the melting point for 30 min to thereby obtain a coating film of 80 µm in film thickness (total film thickness: 110 µm). By using this coating film, the surface roughness and the electroconductivity were evaluated.

Examples 1 to 5, Example 13 and Comparative Examples 2 to 5, and 15 and 16

In each Example, the FEP powder A as a fluorine-containing ethylenic polymer, and as electroconductive materials, a single-walled carbon nanotube (TUBALL, G/D ratio: 91, manufactured by OCSiAl S.A.), a single-walled carbon nanotube (ZEONANO SG101, G/D ratio: 2.1, manufactured by Zeon Corp.), a multi-walled carbon nanotube (NC7000, G/D ratio: 1.2, manufactured by Nanocyl S.A.), an electroconductive carbon fiber (SG-249, manufactured by Osaka Gas Chemical Co. Ltd.), and an electroconductive carbon black (Ketjen Black EC300J, manufactured by Lion Specialty Chemicals Co. Ltd.) were mixed in predetermined mass ratios to thereby obtain a mixed powder composition.

TC-11000 (manufactured by Daikin Industries, Ltd.) as a primer was applied on a SUS304 plate, and dried at 100°C for 30 min to thereby obtain a coating film of 30 µm in thickness; subsequently, the mixed powder composition was electrostatically coated, and sintered at a temperature higher by 80°C than the melting point of the FEP powder A for 30 min to thereby obtain a coating film of 80 µm in film thickness (total film thickness: 110 µm). By using this coating film, the surface roughness and the electroconductivity were evaluated.

### Example 6

The ETFE powder A as a fluorine-containing ethylenic polymer, and a single-walled carbon nanotube ((TUBALL, G/D ratio: 91, manufactured by OCSiAl S.A.) as an electroconductive material were mixed in predetermined mass ratios to thereby obtain a mixed powder composition.

EPW-1609BK (manufactured by Daikin Industries, Ltd.) as a primer was applied on a SUS304 plate, and dried at 100°C for 30 min to thereby obtain a coating film of 30 µm in thickness; subsequently, the mixed powder composition was electrostatically coated, and sintered at a temperature higher by 80°C than the melting point of the ETFE powder A for 30 min to thereby obtain a coating film of 80 µm in film thickness (total film thickness: 110 µm). By using this coating film, the surface roughness and the electroconductivity were evaluated.

### Example 7

The PFA powder A as a fluorine-containing ethylenic polymer, and a single-walled carbon nanotube (TUBALL, G/D ratio: 91, manufactured by OCSiAl S.A.) as an electroconductive material were mixed in predetermined mass ratios to thereby obtain a mixed powder composition.

TC-11000 (manufactured by Daikin Industries, Ltd.) as a primer was applied on a SUS304 plate, and dried at 100°C for 30 min to thereby obtain a coating film of 30 µm in thickness; subsequently, the mixed powder composition was electrostatically coated, and sintered at a temperature higher by 80°C than the melting point of the PFA powder A for 30 min to thereby obtain a coating film of 80 µm in film thickness (total film thickness: 110 µm). By using this coating film, the surface roughness and the electroconductivity were evaluated.

### Comparative Example 6

EPW-1609BK (manufactured by Daikin Industries, Ltd.) as a primer was applied on a SUS304 plate, and dried at 100°C for 30 min to thereby obtain a coating film of 30 µm in thickness; subsequently, the ETFE powder B as a fluorine-containing ethylenic polymer was laid, and sintered at a temperature higher by 80°C than the melting point of the ETFE powder B for 60 min to thereby obtain a coating film of 1,000 µm in film thickness (total film thickness: 1,030 µm). By using this coating film, the surface roughness and the electroconductivity were evaluated. Further, by using a sheet of 200 µm in thickness fabricated by heat press, the stress cracking resistance was evaluated.

### Examples 8 to 11 and Comparative Examples 7 to 14

In each Example, the ETFE powder B as a fluorine-containing ethylenic polymer, and as electroconductive materials, a single-walled carbon nanotube (TUBALL, G/D ratio: 91, manufactured by OCSiAl S.A.), a multi-walled carbon nanotube (NC7000, G/D ratio: 1.2, manufactured by Nanocyl S.A.), an electroconductive carbon fiber (SG-249, manufactured by Osaka Gas Chemical Co. Ltd.), an electroconductive carbon black (Ketjen Black EC300J, manufactured by Lion Specialty Chemicals Co. Ltd.), alumina and zinc oxide as metal oxides and a zinc powder as a metal powder were mixed in predetermined mass ratios to thereby obtain a mixed powder composition.

EPW-1609BK (manufactured by Daikin Industries, Ltd.) as a primer was applied on a SUS304 plate, and dried at 100°C for 30 min to thereby obtain a coating film of 30 µm in thickness; subsequently, the mixed powder composition was laid, and sintered at a temperature higher by 80°C than the melting point of the ETFE powder B for 60 min to thereby obtain a coating film of 1,000 µm in film thickness (total film thickness: 1,030 µm). By using this coating film, the surface roughness and the electroconductivity were evaluated.

Further, in each of Examples 8 to 11 and Comparative Examples 7 to 10, by using a sheet of 200 µm in thickness fabricated by heat press, the stress cracking resistance was evaluated.

### Example 12

The PFA powder B as a fluorine-containing ethylenic polymer and a single-walled carbon nanotube (TUBALL, G/D ratio: 91, manufactured by OCSiAl S.A.) as an electroconductive material were mixed in predetermined mass ratios to thereby obtain a mixed powder composition.

TC-11000 (manufactured by Daikin Industries, Ltd.) as a primer was applied on a SUS304 plate, and dried at 100°C for 30 min to thereby obtain a coating film of 30 µm in thickness; subsequently, the mixed powder composition was laid, and sintered at a temperature higher by 80°C than the melting point of the PFA powder B for 60 min to thereby obtain a coating film of 1,000 µm in film thickness (total film thickness: 1,030 µm). By using this coating film, the surface roughness and the electroconductivity were evaluated.

Evaluation results of these are shown in the following Tables 1 to 3.

**[Table 1]**

| | Comparative Example 1 | Example 1 | Example 2 | Example 3 | Example 4 | Comparative Example 2 | Example 5 | Comparative Example 3 | Comparative Example 15 | Comparative Example 4 | Comparative Example 16 | Comparative Example 5 | Example 6 | Example 7 | Example 13 |
|---|---|---|---|---|---|---|---|---|---|---|---|---|---|---|---|
| FEP powder A | 10000 | 9995 | 9990 | 9980 | 9970 | 9960 | 9970 | 9960 | 9990 | 8500 | 9990 | 9950 | - | - | 9970 |
| ETFE powder A | - | - | - | - | - | - | - | - | - | - | - | - | 9990 | - | - |
| PFA powder A | - | - | - | - | - | - | - | - | - | - | - | - | - | 9990 | - |
| ETFE powder B | - | - | - | - | - | - | - | - | - | - | - | - | - | - | - |
| PFA powder B | - | - | - | - | - | - | - | - | - | - | - | - | - | - | - |
| Single-walled carbon nanotube (G/D ratio: 91) | - | 5 | 10 | 20 | 30 | 40 | - | - | - | - | - | - | 10 | 10 | - |
| Single-walled carbon nanotube (G/D ratio: 2.1) | - | - | - | - | - | - | - | - | - | - | - | - | - | - | 30 |
| Multi-walled carbon nanotube (G/D ratio: 1.2) | - | - | - | - | - | - | 30 | 40 | - | - | - | - | - | - | - |
| Electroconductive carbon fiber | - | - | - | - | - | - | - | - | 10 | 1500 | - | - | - | - | - |
| Electroconductive carbon black | - | - | - | - | - | - | - | - | - | - | 10 | 50 | - | - | - |
| Al2O3 | - | - | - | - | - | - | - | - | - | - | - | - | - | - | - |
| ZnO | - | - | - | - | - | - | - | - | - | - | - | - | - | - | - |
| Zn | - | - | - | - | - | - | - | - | - | - | - | - | - | - | - |
| Surface roughness Ra [µm] | 0.20 | 0.23 | 0.30 | 0.58 | 0.74 | (not coatable) | 0.86 | (not coatable) | 0.40 | 1.20 | 0.37 | 1.21 | 0.21 | 0.35 | 0.94 |
| Electroconductivity Volume resistance [Ω·cm] | >10^14 | 10^13 | 10^9 | 10^7 | 10^5 | - | 10^11 | - | >10^14 | >10^14 | >10^14 | >10^14 | 10^8 | 10^8 | 10^5 |
| The number of times of coating/sintering cycles to obtain a film thickness of 500 µm or larger | 8 | 3 | 2 | 2 | 3 | (not coatable) | 3 | (not coatable) | 7 | 6 | 7 | 6 | 2 | 3 | 3 |
| Stress cracking resistance MIT test [times] | | | | | | | | | | | | | | | |

**[Table 2]**

| | Comparative Example 6 | Example 8 | Example 9 | Example 10 | Comparative Example 7 | Example 11 |
|---|---|---|---|---|---|---|
| FEP powder A | - | - | - | - | - | - |
| ETFE powder A | - | - | - | - | - | - |
| PFA powder A | - | - | - | - | - | - |
| ETFE powder B | 10000 | 9995 | 9990 | 9970 | 9950 | 9970 |
| PFA powder B | - | - | - | - | - | - |
| Single-walled carbon nanotube | - | 5 | 10 | 30 | 50 | - |
| Multi-walled carbon nanotube | - | - | - | - | - | 30 |
| Electroconductive carbon fiber | - | - | - | - | - | - |
| Electroconductive carbon black | - | - | - | - | - | - |
| Al2O3 | - | - | - | - | - | - |
| ZnO | - | - | - | - | - | - |
| Zn | - | - | - | - | - | - |
| Surface roughness Ra [µm] | 0.13 | 0.14 | 0.20 | 0.42 | 3.46 | 0.25 |
| Electroconductivity Volume resistance [Ω·cm] | >10^14 | 10^14 | 10^8 | 10^5 | 10^4 | 10^14 |
| Stress cracking resistance MIT test [times] | 248614 | 239898 | 179724 | 82777 | 53441 | 79582 |

**[Table 3]**

| | Comparative Example 8 | Comparative Example 9 | Comparative Example 10 | Comparative Example 11 | Comparative Example 12 | Comparative Example 13 | Comparative Example 14 | Example 12 |
|---|---|---|---|---|---|---|---|---|
| FEP powder A | - | - | - | - | - | - | - | - |
| ETFE powder A | - | - | - | - | - | - | - | - |
| PFA powder A | - | - | - | - | - | - | - | - |
| ETFE powder B | 9950 | 9900 | 9000 | 9900 | 9000 | 9000 | 9000 | - |
| PFA powder B | - | - | - | - | - | - | - | 9990 |
| Single-walled carbon nanotube | - | - | - | - | - | - | - | 10 |
| Multi-walled carbon nanotube | 50 | - | - | - | - | - | - | - |
| Electroconductive carbon fiber | - | 100 | 1000 | - | - | - | - | - |
| Electroconductive carbon black | - | - | - | 100 | - | - | - | - |
| Al2O3 | - | - | - | - | 1000 | - | - | - |
| ZnO | - | - | - | - | - | 1000 | - | - |
| Zn | - | - | - | - | - | - | 1000 | - |
| Surface roughness Ra [µm] | 0.45 | 0.47 | 3.02 | 3.14 | 0.44 | 0.78 | >5 | 0.69 |
| Electroconductivity Volume resistance [Ω·cm] | 10^6 | >10^14 | <10^4 | >10^14 | >10^14 | >10^14 | 10^14 | 10^7 |
| Stress cracking resistance MIT test [times] | 46068 | 7230 | 3242 | - | - | - | - | - |

From the results of Tables 1 to 3, it is clear that the coating films formed from the powder coating material composition of the present disclosure were excellent in the performance.

### Industrial Applicability

The powder coating material composition of the present disclosure can suitably be used in applications to lining and the like.

## Claims

1. A powder coating material composition comprising a fluorine-containing ethylenic polymer and an electroconductive material,
wherein the electroconductive material is at least partially a carbon nanotube; and
the carbon nanotube is contained in a proportion of 0.01 to 0.35% by mass to a total amount of the fluorine-containing ethylenic polymer and the electroconductive material.

2. The powder coating material composition according to claim 1, wherein the fluorine-containing ethylenic copolymer has an average particle size measured by a laser diffraction scattering method of smaller than 100 µm.

3. The powder coating material composition according to claim 1, wherein the fluorine-containing ethylenic copolymer has the average particle size measured by a laser diffraction scattering method of 100 µm to 1,000 µm.

4. The powder coating material composition according to claim 2, wherein
when measuring a coating film of 80 µm in thickness, obtained by electrostatically coating the powder coating material composition on a metal plate, and subsequently forming a film at a temperature higher by 80°C than the melting point of the fluorine-containing ethylenic polymer,
the powder coating material composition has a film-forming ability to form the coating film with a surface roughness Ra measured by using a miniature surface roughness tester of 3.0 µm or lower and a volume resistivity measured by using a resistivity meter of 1 × 10¹⁴ Ω·cm or lower.

5. The powder coating material composition according to claim 3, wherein
when measuring a coating film of 1,000 µm in thickness, obtained by laying the powder coating material composition on a metal plate, and subsequently forming a film at a temperature higher by 80°C than the melting point of the fluorine-containing ethylenic polymer,
the powder coating material composition has a film-forming ability to form the coating film with a surface roughness Ra measured by using a miniature surface roughness tester of 3.0 µm or lower and a volume resistivity measured by using a resistivity meter of 1 × 10¹⁴ Ω·cm or lower.

6. The powder coating material composition according to claim 1 or 2, wherein the fluorine-containing ethylenic polymer is a copolymer essentially comprising a tetrafluoroethylene unit, and comprising at least one selected from the group consisting of a perfluoroalkyl vinyl ether unit, a hexafluoropropylene unit and an ethylene unit.

7. The powder coating material composition according to any one of claims 1 to 6, wherein the carbon nanotube is a single-walled carbon nanotube.

8. The powder coating material composition according to any one of claims 1 to 7, wherein the carbon nanotube has a G/D ratio of 2.0 or higher.

9. A coating film, being formed from the powder coating material composition according to any one of claims 1 to 8.

10. A laminate comprising the coating film according to claim 9.

11. A laminate comprising the coating film according to claim 9 as a front side layer of the laminate.

12. A coated article comprising a metal substrate having the coating film according to claim 9 or the laminate according to claim 10 or 11 provided on the metal substrate.

## Patentansprüche

1. Pulverbeschichtungsmaterialzusammensetzung, umfassend ein fluorhaltiges ethylenisches Polymer und ein elektrisch leitfähiges Material,
wobei das elektrisch leitfähige Material zumindest teilweise eine Kohlenstoffnanoröhre ist; und
die Kohlenstoffnanoröhre in einem Anteil von 0,01 bis 0,35 Masse-% zu einer Gesamtmenge des fluorhaltigen ethylenischen Polymers und des elektrisch leitfähigen Materials enthalten ist.

2. Pulverbeschichtungsmaterialzusammensetzung nach Anspruch 1, wobei das fluorhaltige ethylenische Copolymer eine durchschnittliche Teilchengröße, gemessen durch ein Laserbeugungsstreuverfahren, von weniger als 100 µm aufweist.

3. Pulverbeschichtungsmaterialzusammensetzung nach Anspruch 1, wobei das fluorhaltige ethylenische Copolymer die durchschnittliche Teilchengröße, gemessen durch ein Laserbeugungsstreuverfahren, von 100 µm bis 1.000 µm aufweist.

4. Pulverbeschichtungsmaterialzusammensetzung nach Anspruch 2, wobei
beim Messen eines Beschichtungsfilms mit einer Dicke von 80 µm, erhalten durch elektrostatisches Beschichten der Pulverbeschichtungsmaterialzusammensetzung auf einer Metallplatte und anschließendes Bilden eines Films bei einer Temperatur, die um 80 °C höher ist als der Schmelzpunkt des fluorhaltigen ethylenischen Polymers,
die Pulverbeschichtungsmaterialzusammensetzung eine Filmbildungsfähigkeit zum Bilden des Beschichtungsfilms mit einer Oberflächenrauheit Ra, gemessen unter Verwendung eines Miniatur-Oberflächenrauheitstesters, von 3,0 µm oder weniger und einem Volumenwiderstand, gemessen unter Verwendung eines Widerstandsmessgeräts, von 1 x 1014 Ω·cm oder weniger aufweist.

5. Pulverbeschichtungsmaterialzusammensetzung nach Anspruch 3, wobei
beim Messen eines Beschichtungsfilms mit einer Dicke von 1.000 µm, erhalten durch Auflegen der Pulverbeschichtungsmaterialzusammensetzung auf eine Metallplatte und anschließendes Bilden eines Films bei einer Temperatur, die um 80 °C höher ist als der Schmelzpunkt des fluorhaltigen ethylenischen Polymers,
die Pulverbeschichtungsmaterialzusammensetzung eine Filmbildungsfähigkeit zum Bilden des Beschichtungsfilms mit einer Oberflächenrauheit Ra, gemessen unter Verwendung eines Miniatur-Oberflächenrauheitstesters, von 3,0 µm oder weniger und einem Volumenwiderstand, gemessen unter Verwendung eines Widerstandsmessgeräts, von 1 x 1014 Ω·cm oder weniger aufweist.

6. Pulverbeschichtungsmaterialzusammensetzung nach Anspruch 1 oder 2, wobei das fluorhaltige ethylenische Polymer ein Copolymer ist, das im Wesentlichen eine Tetrafluorethyleneinheit umfasst und mindestens eines ausgewählt aus der Gruppe bestehend aus einer Perfluoralkylvinylethereinheit, einer Hexafluorpropyleneinheit und einer Ethyleneinheit umfasst.

7. Pulverbeschichtungsmaterialzusammensetzung nach einem der Ansprüche 1 bis 6, wobei die Kohlenstoffnanoröhre eine einwandige Kohlenstoffnanoröhre ist.

8. Pulverbeschichtungsmaterialzusammensetzung nach einem der Ansprüche 1 bis 7, wobei die Kohlenstoffnanoröhre ein G/D-Verhältnis von 2,0 oder höher aufweist.

9. Beschichtungsfilm, der aus der Pulverbeschichtungsmaterialzusammensetzung nach einem der Ansprüche 1 bis 8 gebildet ist.

10. Laminat, umfassend den Beschichtungsfilm nach Anspruch 9.

11. Laminat, umfassend den Beschichtungsfilm nach Anspruch 9 als eine Vorderseitenschicht des Laminats.

12. Beschichteter Gegenstand, umfassend ein Metallsubstrat mit dem Beschichtungsfilm nach Anspruch 9 oder dem Laminat nach Anspruch 10 oder 11, das auf dem Metallsubstrat bereitgestellt ist.

## Revendications

1. Composition de matière de revêtement pulvérulente comprenant un polymère éthylénique contenant du fluor et une matière électro-conductrice,
la matière électro-conductrice étant au moins partiellement un nanotube de carbone ; et
le nanotube de carbone étant contenu dans une proportion de 0,01 à 0,35% en masse pour une quantité totale de polymère éthylénique contenant du fluor et de matière électro-conductrice.

2. Composition de matière de revêtement pulvérulente selon la revendication 1, la granulométrie moyenne du copolymère éthylénique contenant du fluor, mesurée par un procédé de diffusion par diffraction laser, étant inférieure à 100 µm.

3. Composition de matière de revêtement pulvérulente selon la revendication 1, la granulométrie moyenne du copolymère éthylénique contenant du fluor, mesurée par un procédé de diffusion par diffraction laser, étant comprise entre 100 µm et 1000 µm.

4. Composition de matière de revêtement pulvérulente selon la revendication 2, dans laquelle
lors de la mesure d'une pellicule de revêtement de 80 µm d'épaisseur obtenue par un revêtement électrostatique de la composition de matière de revêtement pulvérulente sur une plaque métallique, et formant par la suite une pellicule à une température dépassant de 80°C le point de fusion du polymère éthylénique contenant du fluor,
la composition de matière de revêtement pulvérulente présente une capacité filmogène de constitution de la pellicule de revêtement avec une rugosité superficielle Ra, mesurée en utilisant un rugosimètre miniature de 3,0 µm ou moins, et une résistivité volumique, mesurée à l'aide d'un résistivimètre de 1 x 10¹⁴ Ω.cm ou inférieure.

5. Composition de matière de revêtement pulvérulente selon la revendication 3, dans laquelle
lors de la mesure d'une pellicule de revêtement de 1 000 µm d'épaisseur obtenue en étalant la composition de matière de revêtement pulvérulente sur une plaque métallique, et en formant par la suite une pellicule à une température dépassant de 80°C le point de fusion du polymère éthylénique contenant du fluor,
la composition de matière de revêtement pulvérulente présente une capacité filmogène de constitution de la pellicule de revêtement avec une rugosité superficielle Ra, mesurée en utilisant un rugosimètre miniature de 3,0 µm ou moins, et une résistivité volumique, mesurée à l'aide d'un résistivimètre de 1 x 10¹⁴ Ω.cm ou inférieure.

6. Composition de matière de revêtement pulvérulente selon la revendication 1 ou 2, le polymère éthylénique contenant du fluor étant un copolymère comprenant essentiellement une unité de tétrafluoroéthylène, et comprenant au moins un sélectionné dans le groupe d'unités suivant : une unité de pefluoroalkylvinyléther, une unité d'hexafluoropropylène, et une unité d'éthylène.

7. Composition de matière de revêtement pulvérulente selon une quelconque des revendications 1 à 6, le nanotube de carbone étant un nanotube de carbone mono-paroi.

8. Composition de matière de revêtement pulvérulente selon une quelconque des revendications 1 à 7, le ratio G/D du nanotube de carbone étant 2,0 ou supérieur.

9. Pellicule de revêtement réalisée avec une composition de matière de revêtement pulvérulente selon une quelconque des revendications 1 à 8.

10. Stratifié comprenant la pellicule de revêtement selon la revendication 9.

11. Stratifié comprenant la pellicule de revêtement selon la revendication 9 en tant que couche latérale antérieure du stratifié.

12. Article revêtu comprenant un substrat métallique possédant la pellicule de revêtement selon la revendication 9 ou le stratifié selon la revendication 10 ou 11, agencé sur le substrat métallique.
